# FASCICULE DE BREVET EUROPEEN

(11) **EP 0 814 692 B1**
(45) Date de publication et mention de la délivrance du brevet: **29.11.2000**
(21) Numéro de dépôt: 96905917.9
(22) Date de dépôt: 06.03.1996
(51) Int. Cl.: A47J 31/06

(54) **DISPOSITIF PERMETTANT D'UTILISER, SUR UNE MACHINE A CAFE, DU CAFE MOULU OU DES GALETTES DE CAFE PREEMBALLEES**
VORRICHTUNG UM IN EINER KAFFEEMASCHINE DEN GEBRAUCH VON GEMAHLENEM KAFFEE ODER EINZELVERPACKUNGEN MIT KAFFEEPULVER ZU ERLAUBEN
DEVICE FOR USING GROUND COFFEE OR PRE-PACKAGED COFFEE BLOCKS IN A COFFEE MACHINE

(30) Priorité: 06.03.1995 FR 9502560
(43) Date de publication de la demande: 07.01.1998
(73) Titulaire: Levi, Mario, F-06200 Nice (FR); Levi, Jean-Pierre, F-06200 Nice (FR)
(72) Inventeur: Levi, Mario, F-06200 Nice (FR); Levi, Jean-Pierre, F-06200 Nice (FR)
(74) Mandataire: Hautier, Jean-Louis
(86) Numéro de dépôt international: FR9600347
(87) Numéro de publication internationale: WO9627316

(56) Documents cités:
- EP-A- 0 070 403
- EP-A- 0 555 775
- DE-C- 573 054

## Description

L'invention concerne un dispositif permettant, indifféremment, l'utilisation, sur une machine à café prévue à cet effet, de café moulu ou de galettes de café préemballées, ainsi que l'extraction des galettes de café infusées.

Il existe, actuellement, sur le marché, deux sortes de machines à café, l'une utilisant le café moulu, l'autre des galettes de café préemballées.

Dans le premier cas, le café moulu est disposé dans un filtre de forme cylindrique, monté dans une coupe porte-filtre, se fixant par pivotement dans un système à baïonnette à rampes hélicoïdales, situé sous le porte-coupe, tout en assurant, en fin de course, l'écrasement d'un joint, dit joint de coupe, encastré sous le porte-coupe de façon à ce que l'eau chaude ne puisse s'échapper latéralement.

Le document DE-A-573.054 a pour objet un dispositif de percolation destiné à coopérer avec un appareil d'infusion de café par l'intermédiaire d'un raccord, et ce afin de préparer des boissons à base de café en petites ou grandes quantités ; ce dispositif est caractérisé par le fait qu'une petite ou grande coupelle, qui comprend une cloche à haute étanchéité, est articulée par rapport à un pivot porté par le raccord, lui-même muni d'une garniture étanche.

Ce document ancien définit bien l'état de la technique, il est par ailleurs inapproprié pour l'utilisation des pastilles contenant du café.

Dans le second cas, par contre, l'utilisation de galettes de café préemballées nécessite l'emploi d'une coupe porte-filtre spécialement conçue à cet effet. Pour obtenir l'infusion, la coupe porte-filtre, sur laquelle la galette est déposée, est introduite dans un logement cylindrique comportant des gorges en forme de rampes hélicoïdales, spécialement adaptées à la coupe porte-filtre. Chaque rampe est débouchante et permet l'introduction de la coupe selon un positionnement angulaire limité. La galette de café est ensachée entre deux feuilles de papier, perméables aux liquides, soudées ensemble en formant une collerette utile à la préhension de la galette de café après son infusion.

Dans les dispositifs connus de ce genre, la collerette de la galette de café préemballée fait une sur épaisseur et rend mal aisé l'introduction de la coupe porte-filtre dans son logement cylindrique. Lorsque l'infusion de café est terminée, et que l'on retire la coupe porte-filtre de son logement, il arrive fréquemment que la galette de café infusée reste encastrée, car ses rebords prennent appui sur les parois du logement cylindrique et dans les gorges hélicoïdales.

Dans cette situation, l'usager décroche manuellement la galette de café infusée au risque de se brûler, car le logement cylindrique est alors à une température voisine de 90°C environ.

Des solutions ont été proposées pour remédier à ces inconvénients, en utilisant des dispositifs spécialement conçus à cet effet.

On connaît déjà différents moyens permettant d'utiliser une machine à café traditionnelle pour l'infusion de galettes ou de cartouches de café préemballées, tels que ceux décrits dans les brevets DE-A-573 054 et EP-A-0.070.403. Un adaptateur, conçu pour se fixer sous le distributeur d'eau chaude de la machine, à la place de la coupe porte-filtre d'origine, comporte, à sa base, des dispositifs permettant le montage, par un système à baïonnette, d'une coupe porte-filtre correspondant à celle utilisée sur les machines à galettes de café préemballées.

Une telle solution, qui oblige à recourir à la juxtaposition de sous-ensemble d'origine commerciale différente; outre qu'elle ne facilite pas l'utilisation de galettes de café préemballées sur des machines à café traditionnelles, rend celle-ci peu commode ; ceci d'autant qu'elle ne résout pas le problème posé par l'extraction après infusion des galettes imprégnées d'eau brûlante.

Le document EP-A-0.555.775 propose un système coulissant muni d'un réceptacle avec un filtre pour une machine à café expresso, qui comprend un corps cylindrique avec des surfaces annulaires inclinées, muni d'une poignée, le corps cylindrique pouvant tourner pour se soulever ou s'abaisser sur les surfaces inclinées correspondantes d'une structure en forme de boîte. Pendant le soulèvement, le corps cylindrique soulève le réceptacle avec son filtre, sans rotation, à l'encontre d'une garniture fixe, qui se trouve en regard, ledit réceptacle étant ainsi soumis à un mouvement linéaire sans rotation. La garniture fixe est un joint torique, muni d'une rainure circulaire inférieure et d'une rainure circulaire supérieure pour avoir une meilleure étanchéité, au niveau du bord supérieur du réceptacle.

Le système de montée ou de descente du corps cylindrique s'effectue par la coopération de plusieurs surfaces ayant des pans inclinés. Outre les problèmes de fabrication et les coûts de fabrication, il y a des possibilités de grippage très important de ces mouvements de montée ou de descente ; de plus l'introduction dudit corps cylindrique dans la structure en forme de boîte n'est pas des plus aisée.

La présente invention a pour but de remédier à ces inconvénients. Cette invention, telle qu'elle est caractérisée, résout le problème consistant à créer un dispositif permettant, indifféremment, l'utilisation, sur une machine à café conçue à cet effet, de café moulu ou de galettes de café préemballées, ainsi que l'extraction mécanique des galettes de café infusées.

Le dispositif permettant d'utiliser, indifféremment, sur une machine à café, du café moulu ou des galettes de café préemballées, ainsi que l'extraction mécanique des galettes de café infusées, selon l'invention, comportant une coupe porte-filtre se fixant sous le porte-coupe par l'intermédiaire d'un système à baïonnette constitué de bossages hélicoïdaux, diamétralement opposés, situés sur les côtés de la coupe porte-filtre, et d'axes épaulés et fixés sous le porte-coupe tels que décrits dans le brevet français FR-A-2 730 621 publié le 23.08.96.

Le dispositif objet de l'invention se caractérise par les dispositions constructives telles que définies dans la revendication 1.

Selon un mode de réalisation, l'adaptateur est constitué d'une coupelle de forme tronconique, perforée axialement, prenant appui sur un rebord aménagé à cet effet dans la coupe porte-filtre, dont la face supérieure comporte un évidement délimité radialement par un bourrelet annulaire, de diamètre et de section correspondant à celui réalisé à la périphérie du filtre porte-galette et épousant la forme de celle-ci.

Pour une question d'étanchéité, le diamètre moyen du bourrelet annulaire, réalisé dans la face supérieure de la coupelle et à la périphérie du filtre porte-galette, est supérieur au diamètre intérieur du joint de coupe.

La butée limitant le débattement de la lunette articulée, dans laquelle s'encastre la base de la coupe porte-filtre, comporte une partie plane, parallèle au plan passant par les axes épaulés. La lunette articulée prend appui sur cette face plane de la butée, par l'intermédiaire d'une languette qui lui est solidaire.

Selon un mode de réalisation, la languette est retenue et plaquée contre la butée par un aimant encastré dans la languette ou la face plane de la butée. Dans le premier cas, la butée est réalisée en métal magnétique.

Le doigt d'éjection de la galette de café, après infusion, est fixé sur la face supérieure de la lunette articulée, au-delà du rayon de giration des bossages hélicoïdaux de la coupe-filtre, à une distance de l'axe d'articulation de la lunette supérieure à celle séparant ledit axe de la bordure de la galette de café préemballée.

Pour faciliter le décollement de la bordure de la galette, après infusion, la hauteur du doigt d'éjection est déterminée de façon que l'extrémité supérieure de celui-ci doit être comprise dans un plan parallèle à la face externe du joint de coupe situé juste un peu en dessous de celle-ci.

Les avantages obtenus, grâce à cette invention, consiste essentiellement en ceci que la machine à café peut être adaptée rapidement et simplement à l'utilisation de café moulu ou de galettes de café préemballées, que la galette de café se met en place de façon aisée, que l'éjection mécanique de la galette de café infusée évite tous risques de brûlures à l'utilisateur et que le déplacement combiné de la coupe porte-filtre est obtenu par un unique mouvement appliqué à la poignée.

D'autres caractéristiques et avantages apparaîtront dans la description qui va suivre d'un mode de réalisation d'une machine à café selon l'invention, donné à titre d'exemple non limitatif au regard des dessins annexés.

La figure 1 représente une vue de face en coupe du dispositif, en version galettes de café préemballées.

La figure 2 représente une vue de dessus du dispositif selon la figure 1.

Les figures 3 à 8 montrent le fonctionnement du dispositif selon les figures 1 et 2 et de son système d'éjection mécanique des galettes de café infusées.

La figure 9 représente une vue de face en coupe du dispositif, en version café moulu.

La figure 10 représente une vue en perspective partielle d'une machine à café équipée du dispositif selon la présente invention, lors de la mise en place de la coupe porte-filtre sur la lunette articulée.

La figure 11 représente une vue latérale du dispositif selon l'invention, l'ensemble des pièces qui le constitue étant en vue éclatée.

La figure 12 représente une vue en coupe détaillée et agrandie de la chambre d'infusion renfermant une galette de café préemballée.

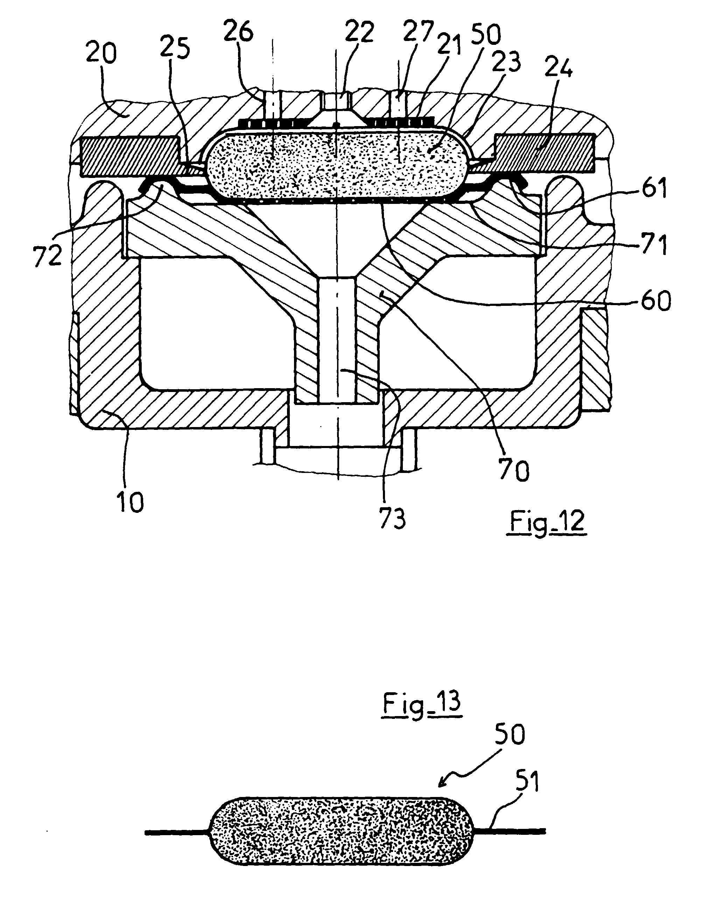

Enfin, la figure 13 représente une vue en coupe d'une galette de café utilisée avec un des modes de réalisation de l'invention.

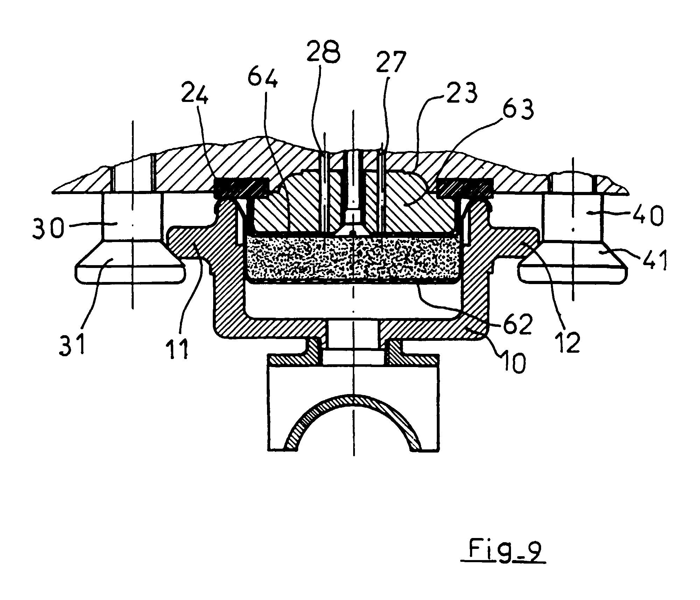

Les figures représentent un dispositif selon l'invention, permettant, indifféremment, l'utilisation, sur une même machine à café, de café moulu (figure 9) ou de galettes de café préemballées (autres figures), comportant une coupe porte-filtre 10, à manche 16, munie de bossages latéraux hélicoïdaux 11 et 12 destinés à prendre appui sur les épaulements 31 et 41 d'axes épaulés 30 et 40 fixés sous le porte-coupe 20.

Le porte-coupe 20 est bien représenté sur la figure 12 et est muni d'une douchette amovible 21, fixée par une vis 22 dans le fond d'un évidement 23 reproduisant la forme d'une galette de café préemballée 50, à bordure 51, disposée entre la douchette 21 et un filtre métallique 60, à bourrelet annulaire 61, épousant la forme de la galette de café 50 qu'il supporte, en s'emboîtant sur le bourrelet annulaire 72 d'une coupelle 70 à évidement 71, reposant sur un rebord interne 13 de la coupe porte-filtre.

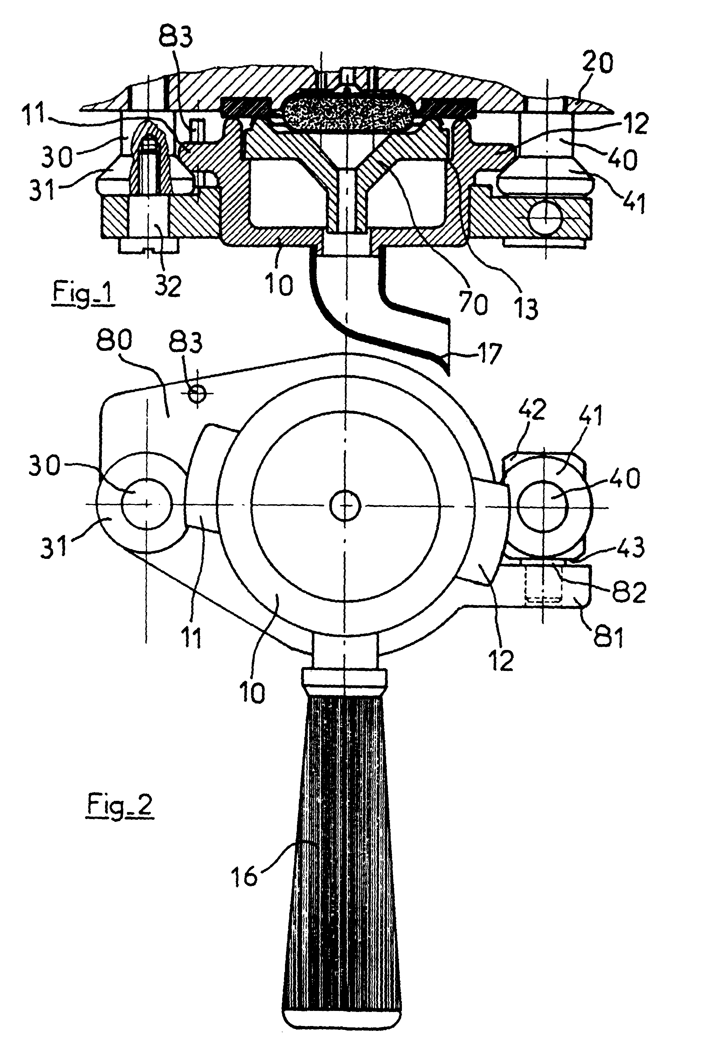

Ladite coupe porte-filtre 10 est encastrée, par sa base, dans une lunette 80 articulée par rapport à une vis 32, voir les figures 1 et 11, montée sous l'axe épaulé gauche 30 et venant s'appuyer, en fin de course, par l'intermédiaire d'une languette 81, contre une butée 42 à méplat 43, fixée sous l'axe épaulé droit 40 ; ladite languette 81 comportant un aimant 82, dirigé vers le méplat 43 de la butée 42, et ladite lunette 80 étant munie d'un doigt d'éjection 83 de la galette de café infusée retenue par la lèvre effilée 25 du joint de coupe 24 fixée sous le porte-coupe 20.

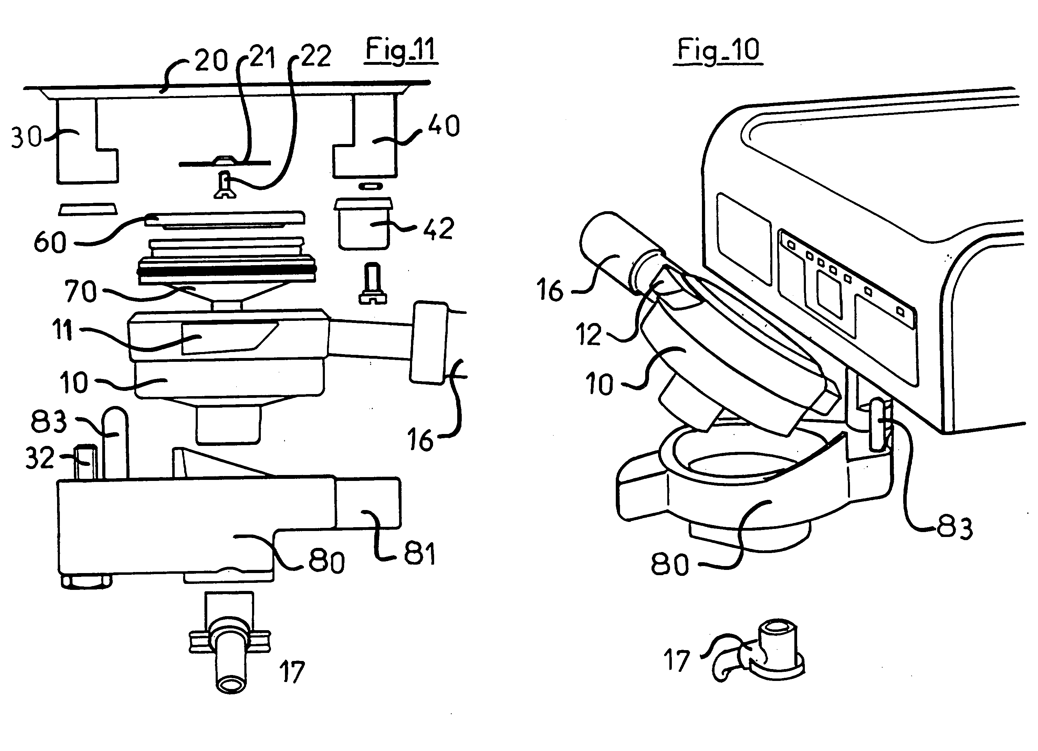

En examinant maintenant plus en détail les figures 1 et 2, on remarque que la coupe porte-filtre 10, étant donné son encastrement dans la lunette 80 articulée par rapport à l'axe épaulé gauche 30, comme cela est représenté à la figure 10, est ainsi parfaitement maintenue et présentée lors de son engagement sous le porte-coupe 20, avec positionnement précis, en fin de course, dans l'axe du porte-coupe 20, par suite de la mise en contact de la languette 81 contre la butée 42 fixée sous l'axe épaulé droit 40 ; cette présentation s'étant effectuée par action sur le manche 16 de la coupe porte-filtre 10, il suffit de maintenir et d'intensifier l'effort exercé sur le manche 16 vers la droite pour obtenir l'engagement progressif des bossages hélicoïdaux 11 et 12 sur les épaulements 31 et 41 des axes épaulés 30 et 40, entraînant le coulissement, vers le haut, de la coupe porte-filtre 10, par rapport à la lunette articulée 80, provoquant, en fin de course, le blocage de la galette de café 50 entre la douchette 21 du porte-coupe et le filtre métallique support de galette 60, ainsi que le pincement du joint de coupe 24 par le bourrelet annulaire 61 du filtre métallique 60 et le resserrement latéral de la galette de café 50 par la lèvre effilée 25 du joint de coupe 24, encastrée dans la base du porte-coupe 20.

L'étanchéité étant alors assurée, l'infusion peut commencer par éjection d'eau à température convenable par les conduits 26 et 27 du porte-coupe 20 débouchant au-dessus de la douchette 21 : eau qui sera ainsi forcée à traverser la galette de café 50, pour finalement s'écouler par l'orifice axial 73 de la coupelle 70, puis dans le bec répartiteur 17 situé sous la coupe porte-filtre 10.

L'infusion étant terminée, il suffit, pour obtenir le dégagement de la galette de café 50 et le retour en position d'attente de la coupe porte-filtre 10, d'exercer un effort vers la gauche, sur le manche 16 de cette dernière pour obtenir tout d'abord, le recul de celle-ci dans la lunette 80 et le dégagement de la galette de café 50 qui reste retenue par la lèvre effilée 25 du joint de coupe 24 ; la coupe porte-filtre 10 reposant à nouveau contre la face supérieure de la lunette 80, il suffit d'exercer une action longitudinale sur le manche 16 pour vaincre la force d'attraction exercée par l'aimant 82 sur la butée 42 et obtenir le pivotement vers l'avant de la lunette 80, dont le doigt d'éjection 83, lors de sa trajectoire, vient en contact avec le bord 51 de la galette 50, qu'il décolle en exerçant une action qui entraîne la chute de cette dernière dans un récipient non représenté, situé sous le dispositif, puisque, dans l'intervalle, le côte arrière de la lunette 80 a franchi et dépassé l'aplomb du porte-coupe 20.

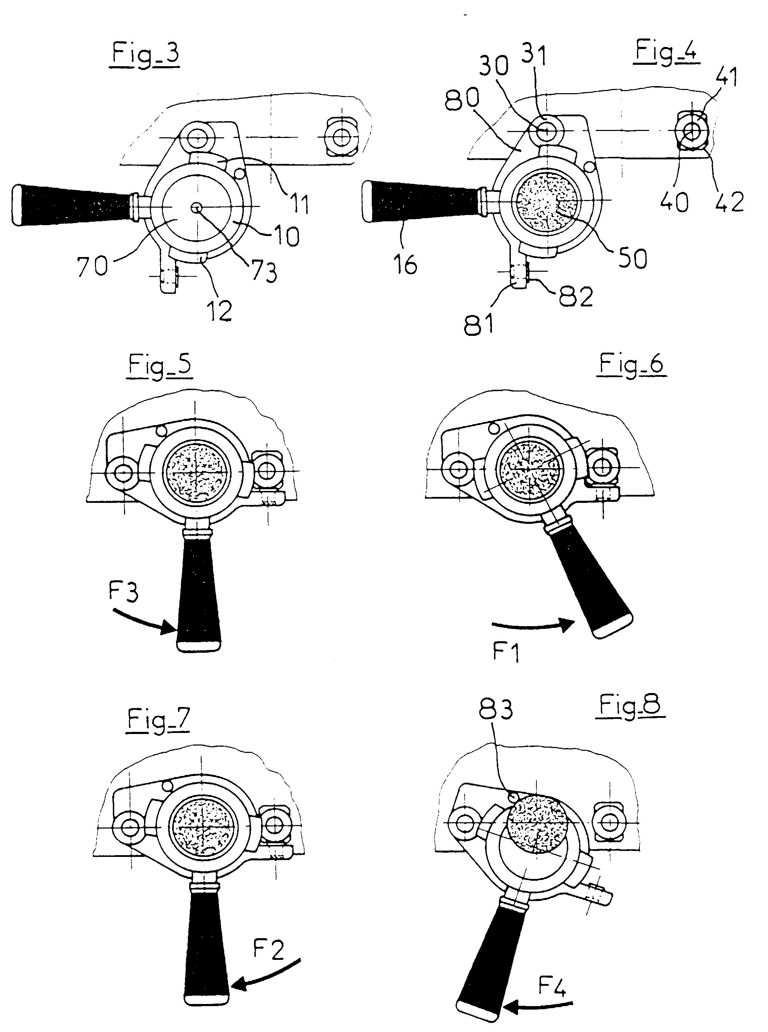

En se rapportant maintenant aux figures 3 à 8, montrant le fonctionnement du dispositif, on remarque que, comme cela a déjà été expliqué ci-dessus, la galette 50 est tout d'abord placée sur le filtre métallique 60, situé à la partie inférieure de la coupe porte-filtre 10 (figures 3 et 4), et une action vers la droite est exercée sur le manche 16 de ladite coupe, jusqu'à mise en contact de la languette 81 contre la butée 42 (figure 5). L'action sur le manche 16 est alors poursuivie et intensifiée pour obtenir le blocage de la galette 50 dans l'évidement du porte-coupe 20 (figure 6). Pour obtenir le dégagement de la coupe porte-filtre 10, puis l'éjection mécanique de la galette de café 50, il suffit d'exercer sur le manche 16, une action dans le sens inverse, pour obtenir le dégagement de la galette de café 50 (figure 7) puis l'éjection de ladite galette sous l'action du doigt 83 (figure 8).

En se rapportant finalement à la figure 9, on remarque que, pour utiliser du café moulu, il suffit tout d'abord de retirer le filtre métallique porte-galette 60 et la coupelle 70 de la coupe porte-filtre 10 et de les remplacer par un filtre cylindrique conventionnel 62, puis de retirer la douchette 21 et de la remplacer par un tassoir 63, à douchette 64, dont la partie supérieure épouse la forme de l'évidement 23 pour galettes de café préemballées 50. Le dispositif fonctionne alors dans la demande de brevet français N° 95/01961.

On remarque que, quelle que soit la version choisie, l'adaptation de la machine est simple et à la portée d'un utilisateur courant, puisque l'outillage nécessaire se limite à un simple tournevis.

Le fonctionnement du dispositif est bien représenté aux figures 3 à 8.

Sur la figure 3, la lunette 80 est en position décalée par rapport au porte-coupe 20 où sont présents les axes épaulés 30 et 40. Cette disposition facilite la mise en place de la coupe porte-filtre 10 par rapport à ladite lunette 80.

Sur la figure 4, il est aisé de comprendre que dans cette position identique à la figure 3, il est très facile de mettre en place la galette de café préemballée 50 au-dessus de la coupelle 70 contenue dans cette coupe porte-filtre 10.

Sur la figure 5, l'ensemble constitué par la lunette 80, la coupe porte-filtre 10 et la galette 50 peut être mû en rotation selon F3, autour de l'axe épaulé gauche 30, jusqu'à ce que la languette 81 vienne au contact de la butée 42 et soit immobilisée dans cette position par l'intermédiaire de son aimant 82. A ce moment, ladite coupe 10 est située sous et en vis-à-vis du porte coupe 20 et les bossages latéraux hélicoïdaux 11 et 12 sont au contact des épaulements 31 et 41.

Sur la figure 6, le serrage selon F1 de la coupe porte-filtre 10 contre ledit porte-coupe 20 pour permettre la lixiviation s'effectue par simple déplacement du manche 16 de la coupe 10.

Sur la figure 7, le desserrage selon F2 est un mouvement inverse à celui décrit en figure 6.

De la même façon et selon la figure 8, la rotation selon F4 est un mouvement inverse à celui décrit en figure 5.

L'objet de l'invention est donc de faciliter le ppsitionnement de la coupe porte-filtre 10 sous le porte-coupe 20 et le serrage et le desserrage pour permettre la lixiviation.

### REFERENCES

- 10.: Coupe Porte-filtre
- 11 et 12.: Bossages latéraux et hélicoïdaux
- 13.: Rebord interne du porte-filtre 10
- 16.: Manche du porte-filtre 10
- 17.: Bec répartiteur
- 20.: Porte-coupe
- 21.: Douchette amovible
- 22.: Vis
- 23.: Evidement
- 24.: Joint de Coupe
- 25.: Lèvre effilée du joint 24
- 26 et 27.: Conduits de porte-coupe 20
- 30.: Axe épaulé gauche
- 31.: Epaulement
- 32.: Vis
- 40.: Axe épaulé droit
- 41.: Epaulement
- 42.: Butée
- 43.: Méplat de la butée 42
- 50.: Galette de café préemballée
- 51.: Bordure de la galette 50
- 60.: Filtre métallique
- 61.: Bourrelet annulaire du filtre 60
- 62.: Filtre cylindrique conventionnel
- 63.: Tassoir
- 64.: Douchette
- 70.: Coupelle
- 71.: Evidement de la coupelle 70
- 72.: Bourrelet annulaire de la coupelle 70
- 73.: Orifice axial de la coupelle 70
- 80.: Lunette
- 81.: Languette
- 82: Aimant de la languette 81
- 83.: Doigt d'éjection porté par la lunette 80
- F1.: Serrage de la coupe porte-filtre 10 contre le porte-coupe 20
- F2.: Desserrage de la coupe porte-filtre 10 par rapport au porte-coupe 20
- F3.: Rotation de la lunette 80 par rapport à son axe de rotation constitué par l'axe épaulé 30 en direction du porte-coupe 20
- F4.: Rotation de la lunette 80 sur son axe épaulé 30 dans le sens d'un éloignement par rapport au porte-coupe 30.

## Revendications

1. Dispositif permettant d'utiliser, indifféremment, sur une machine à café, dans un premier mode du café moulu ou dans un second mode des galettes de café préemballées, et permettant l'extraction mécanique desdites galettes dans le second mode, le dispositif comportant un porte-coupe ayant un évidement (23),un joint de coupe (24) comportant dans le prolongement de la face en regard de l'évidement (23) une lèvre annulaire (25) effilée dont, dont le diamètre est sélectionné de manière à ce qu'il soit inférieur au diamètre de la galette destinée à être utilisé dans le dispositif, ainsi qu'une coupe porte-filtre (10) se fixant sur le porte-coupe (20) par l'intermédiaire d'un système à baïonnette constitué de bossages hélicoïdaux (11,12), diamétralement opposés, situés sur les côtés de la coupe porte-filtre (10) et d' axes épaulés (30,40) fixés sous le porte-coupe (20), une lunette (80) articulée par rapport à l'un desdits axes épaulés ( 30), une butée (42) fixée sur l'un des axes épaulés limitant le débattement de la lunette (80), la lunette (80) comportant sur le dessus, un doigt d'éjection (83) le dit dispositif comportant par ailleurs:
- monté de façon amovible, lors du premier mode d'utilisation un filtre (62) amovible pour café moulu monté dans la coupe porte-et filtre 10 et un tassoir amovible ( 63) à douchette dont la partie supérieure épouse la forme dudit évidement 23 et de forme appropriée à celle du filtre (62) ou
- lors du second mode d'utilsation un adaptateur de filtre amovible (70,60) pour galette équipant le porte filtre (10), une douchette (21) située dans l'évidement (23) du porte coupe (20), le porte filtre venant s'encastrer par sa base dans la lunette 80), le doigt d'éjection (83) étant situé sur le dessus de la lunette de façon que, lors du pivotement de la lunette (80), son extrémité supérieure décrive un arc de cercle traversant l'espace réservé à ladite galette.

2. Dispositif, selon la revendication 1, caractérisé en ce
que l'adaptateur de filtre pour galettes de café préemballées est constitué d'une coupelle de forme tronconique (70), perforée axialement, prenant appui sur un rebord (13) aménagé à cet effet dans la coupe porte-filtre (10), dont la face supérieure comporte un évidement (71), délimité radialement par un bourrelet annulaire (72), de diamètre et de section correspondant à celui réalisé à la périphérie d'un filtre porte-galette (60), épousant la forme de celle-ci.

3. Dispositif selon la revendication 2, caractérisé en ce
que le diamètre moyen du bourrelet annulaire (72), réalisé dans la face supérieure de la coupelle (70) et à la périphérie du filtre porte-galette (60), est supérieur au diamètre intérieur du joint de coupe (24).

4. Dispositif selon la revendication 1, caractérisé en ce
que la butée (42) limitant le débattement de la lunette articulée (80), dans laquelle s'encastre la base de la coupe filtre (10), comporte un méplat (43), parallèle au plan passant par les axes épaulés (30, 40).

5. Dispositif selon la revendication 4, caractérisé en ce
que la lunette articulée (80), dans laquelle s'encastre la base de la coupe porte-filtre (10), prend appui sur le méplat (43) limitant son débattement par l'intermédiaire d'une languette (81) qui lui est solidaire.

6. Dispositif selon la revendication 5, caractérisé en ce
que la languette (81) est retenue temporairement contre la face portante de la butée par un aimant (82).

7. Dispositif selon la revendication 6, caractérisé en ce
que l'aimant (82) est encastré dans la languette (81).

8. Dispositif selon l'une quelconque des revendications précédentes, caractérisé en ce
que la butée (42) est réalisée dans un métal magnétique.

9. Dispositif selon la revendication 1, caractérisé en ce
que le doigt d'éjection (83) de la galette de café (50) infusée est disposé au-delà du rayon de giration des bossages hélicoïdaux (11, 12) de la coupe porte-filtre (10), à une distance de l'axe d'articulation de la lunette (80) supérieure à celle séparant ledit axe de la bordure (51) de la galette de café préemballée (50).

10. Dispositif selon l'une quelconque des revendications précédentes, caractérisé en ce
que la hauteur du doigt d'éjection (83) est déterminée de façon que l'extrémité supérieure de celui-ci soit comprise dans un plan parallèle à la face externe du joint de coupe (24) situé juste un peu en dessous de celle-ci.

## Patentansprüche

1. Vorrichtung zur Benutzung in einer Kaffeemaschine von unterschiedslos, in einer ersten Ausführungsart, gemahlenem Kaffee bzw., in einer zweiten Ausführungsart, Einzelverpackungen von Kaffeepulver, und die den mechanischen Auswurf der besagten Einzelverpackungen von Kaffeepulver in der zweiten Ausführungsart erlaubt, wobei die Vorrichtung einen Schalenhalter mit einer Ausmuldung (23) umfaßt sowie eine Schalendichtung (24), die in der Verlängerung der der Ausmuldung (23) gegenüber liegenden Seite eine ringförmige sich verjüngende Lippe (25) aufweist, deren Durchmesser so gewählt ist, daß dieser kleiner ist als der Durchmesser der zur Verwendung in der Vorrichtung vorgesehenen Einzelverpackungen von Kaffeepulver, und eine Filterschale (10), welche auf dem Schalenhalter (20) mit Hilfe eines aus schrägen sich an den Seiten der Filterschale (10) diametral gegenüber liegenden Nasen (11, 12) und konisch geschulterten, unter dem Schalenhalter (20) angebrachten Zapfen (30, 40) gebildeten Bajonettsystems befestigt ist, einen in Bezug auf einen der besagten geschulterten Zapfen (30) schwenkbaren Sitz (80), einen auf einem der geschulterten Zapfen befestigten Anschlag (42), welcher die Bewegung des Sitzes (80) begrenzt, und dieser Sitz (80) auf der Oberseite einen Auswurfstift (83) aufweist; die besagte Vorrichtung umfaßt ferner:
- bei der ersten Ausführungsart einen losen Filter (62) für gemahlenen Kaffee, der in Schalenhalter und Filterschale (10) eingesetzt wird, und einen abnehmbaren Verdichtungskörper (63) mit Brausenplatte, dessen oberer Teil der Form der besagten Ausmuldung (23) entspricht und dessen unterer Teil der Form des Filters (62) angepaßt ist, oder
- bei der zweiten Ausführungsart einen losen Filteradapter (70, 60) für die in den Filterhalter (10) eingelegten Einzelverpackungen von Kaffeepulver, eine in der Ausmuldung (23) der Schale (20) befindliche Brausenplatte (21), wobei sich der Filterhalter an seiner Basis in den Sitz (80) einfügt, und der Auswurfstift an der Oberseite des Sitzes so befestigt ist, daß bei einer Schwenkung des Sitzes (80) sein oberes Ende eine Kreisbewegung beschreibt, welche den für die Einzelverpackung von Kaffeepulver reservierten Raum durchfährt.

2. Vorrichtung gemäß Anspruch 1, dadurch gekennzeichnet, daß der Filteradapter für Einzelverpackungen von Kaffeepulver aus einem stumpfkegelförmigen axial perforierten Napf (70) besteht, der auf einem Ansatz (13) aufliegt, welcher zu diesem Zweck an der Filterschale (10) ausgeführt ist, deren obere Fläche eine Mulde (71) aufweist, die durch einen ringförmigen Wulst (72) begrenzt ist mit Durchmesser und Querschnitt entsprechend denen, die am Umfang eines die Einzelverpackungen von Kaffeepulver aufnehmenden Filters (60) ausgeführt sind und dessen Form annehmen.

3. Vorrichtung gemäß Anspruch 2, dadurch gekennzeichnet, daß der mittlere Durchmesser des ringförmigen, an der oberen Seite des Napfes (70) und am Umfang des die Einzelverpackungen von Kaffeepulver aufnehmenden Filters (60) ausgeführten Wulstes (72) größer ist als der Innendurchmesser der Schalendichtung (24).

4. Vorrichtung gemäß Anspruch 1, dadurch gekennzeichnet, daß der Anschlag (42), der die Bewegung des schwenkbaren Sitzes (80) begrenzt in den sich die Basis der Filterschale (10) einfügt, eine Seitenfläche (43) aufweist, die parallel zu der durch die geschulterten Zapfen (30, 40) verlaufende Ebene liegt.

5. Vorrichtung gemäß Anspruch 4, dadurch gekennzeichnet, daß der schwenkbare Sitz (80), in den sich die Basis der Filterschale (10) einfügt, an der Seitenfläche (43) anliegt, und seine Bewegung durch eine mit diesem fest verbundene Zunge (81) begrenzt wird.

6. Vorrichtung gemäß Anspruch 5, dadurch gekennzeichnet, daß die Zunge (81) kurzzeitig mit Hilfe eines Magnets (82) gegen die tragende Fläche des Anschlags angezogen wird.

7. Vorrichtung gemäß Anspruch 6, dadurch gekennzeichnet, daß der Magnet (82) in die Zunge (81) eingesetzt ist.

8. Vorrichtung gemäß irgendeinem der vorhergehenden Ansprüche, dadurch gekennzeichnet, daß der Anschlag (42) aus einem Magnetmetall hergestellt ist.

9. Vorrichtung gemäß Anspruch 1, dadurch gekennzeichnet, daß der Auswurfstift (83), der den ausgebrühten Kaffeekuchen (50) auswirft, außerhalb des Drehbereichs der schrägen Nasen (11, 12) der Filterschale (10) angeordnet ist, und zwar in einem größeren Abstand zu der Schwenkachse des Sitzes (80) als der, welcher die besagte Achse vom Rand (51) der Einzelverpackungen von Kaffeepulver (50) trennt.

10. Vorrichtung gemäß irgendeinem der vorhergehenden Ansprüche, dadurch gekennzeichnet, daß die Höhe des Auswurfstiftes (83) so bestimmt ist, daß sich dessen oberes Ende zwischen einer Ebene parallel zu der Außenfläche der gerade etwas unterhalb dieser liegenden Schalendichtung (24) befindet.

## Claims

1. Device allowing use of ground coffee in a first method of application or prepacked coffee blocks in a second method of application indifferently on a coffee machine and allowing mechanical extraction of the said blocks in the second method of application, the device consisting of a cup bearer with a recess (23), a cup seal (24), with as an extension of the surface facing the recess (23), a tapered annular lip (25) whose diameter is selected so that it is less than the diameter of the block for use in the device and a filter-bearing cup (10) secured on the cup bearer (20) through an attachment consisting of helicoidal bosses (11, 12), diagonally opposite, situated on the sides of the filter-bearing cup (10) and the shouldered pins (30, 40) fixed under the cup bearer (20), a rest (80) articulated relative to the said shouldered pins (30), a stop (42) fixed on one of the shouldered pins limiting movement of the rest (80), the rest (80) comprising on the upper side an ejection pin (83), the said device moreover comprising:
- fitted independently, in the first method of application, a removable filter (62) for ground coffee fitted in the filter-bearing cup 10 and a movable press (63) with spray head the upper part of which marries the shape of the said recess 23 and shaped appropriately to match that of the filter (62) or
- in a second method of use, a movable filter adaptor (70, 60) for block equipping the filter bearer (10), a spray head (21) situated in the recess (23) of the cup bearer (20), the filter bearer then fitting by its lower part into the rest (80), the ejection pin (83) being situated on the upper side of the rest so that, on pivoting the rest (80), its upper end moves in an arc through the space reserved for the said block.

2. Device according to claim 1, characterized in that the filter adaptor for prepacked coffee blocks consists of a cone-shaped cup (70), with axially drilled hole, bearing on an edge (13) arranged to this effect in the filter-bearing cup (10), the upper side of which has a recess (71), radially bordered by an annular bead (72), with diameter and section corresponding to that executed at the edge of the block-bearing filter (60), marrying the form of the latter.

3. Device according to claim 2 characterized in that the mean diameter of the annular bead (72), executed in the upper side of the cup (70) and at the edge of the block-bearing filter (60), is greater than the inner diameter of the cup seal (24).

4. Device according to claim 1, characterized in than the stop (42) limiting movement of the articulated rest (80), in which fits the base of the filter cup (10), has a flat (43) parallel to the plane passing through the shouldered pins (30, 40).

5. Device according to claim 4, characterized in that the articulated rest (80), into which fits the base of the filter-bearing cup (10), bears on the flat (43) limiting its movement through a tab (81) which forms an integral part of it.

6. Device according to claim 5 characterized in that the tab (81) is temporarily retained against the bearing surface of the stop by a magnet (82).

7. Device according to claim 6, characterized in that the magnet (82) is embedded in the tab (81).

8. Device according to any one of the aforesaid claims characterized in that the stop (42) is manufactured in a magnetic metal.

9. Device according to claim 1 characterized in that the ejection pin (83) of the coffee block (50), once used, is arranged beyond the radius of movement of the helicoidal bosses (11, 12) of the filter-bearing cup (10), at a distance from the pivoting axis of the rest (80), greater than the one separating the said edge (51) from the pre-packed coffee block (50).

10. Device according to any one of the aforesaid claims characterized in that the height of the ejection pin (83) is determined so that the upper end of this is included in a plane parallel to the outer surface of the cup seal (24) situated just a little below it.
